# EUROPÄISCHE PATENTSCHRIFT

(11) **EP 1 145 538 B1**
(45) Veröffentlichungstag und Bekanntmachung des Hinweises auf die Patenterteilung: **01.09.2010**
(21) Anmeldenummer: 99929089.3
(22) Anmeldetag: 03.05.1999
(51) Int. Cl.: H04Q 3/00, H04L 12/24

(54) **VERFAHREN UND KOMMUNIKATIONSSYSTEM ZUR BEHANDLUNG VON ZUSTANDSINFORMATIONEN DURCH EIN MEHRERE MANAGEMENTEBENEN AUFWEISENDES MANAGEMENTNETZ**
METHOD AND COMMUNICATION SYSTEM FOR PROCESSING STATE INFORMATION IN A MANAGEMENT NETWORK HAVING DIFFERENT MANAGEMENT LEVELS
PROCEDE ET SYSTEME DE COMMUNICATION POUR TRAITER DES INFORMATIONS D'ETAT PAR L'INTERMEDIAIRE D'UN RESEAU DE GESTION PRESENTANT PLUSIEURS NIVEAUX DE GESTION

(30) Priorität: 11.05.1998 DE 19821032
(43) Veröffentlichungstag der Anmeldung: 17.10.2001
(73) Patentinhaber: SIEMENS AKTIENGESELLSCHAFT, 80333 München (DE)
(72) Erfinder: HIRSCH, Lucian, D-81373 München (DE); SCHMIDBAUER, Alfred, D-81671 München (DE)
(86) Internationale Anmeldenummer: PCT/DE1999/001309
(87) Internationale Veröffentlichungsnummer: WO 1999/059326

(56) Entgegenhaltungen:
- EP-A- 0 810 756
- WO-A-96/20547
- WO-A-96/24899
- US-A- 5 317 568
- US-A- 5 317 568
- HAJELA S: "HP OEMF: ALARM MANAGEMENT IN TELECOMMUNICATION NETWORKS" HEWLETT-PACKARD JOURNAL, Bd. 47, Nr. 5, 1. Oktober 1996 (1996-10-01), Seiten 22-30, XP000631663
- 10 September 1992 (1992-09-10), "Information technology - Open Systems Interconnection - Systems Management: Event report management function; X.734 (09/92)" XP017404181
- ABSTRACT ARTICLE: 'Information technology - Open Systems Interconnection - Systems Management: Event report management function; X.734 (09/92)' ITU-T STANDARD IN FORCE (I) Nr. X.734, 10 September 1992, INTERNATIONAL TELECOMMUNICATION UNION, GENEVA, CH, XP017404181
- RAY HUNT: 'SNMP,SNMPv2 and CMIP - the technologies for multivendor network management' COMPUTER COMMUNICATIONS Bd. 20, 1997, Seiten 73 - 88

## Beschreibung

Die Erfindung betrifft ein Verfahren sowie ein entsprechendes Kommunikationssystem zur Behandlung von Zustandsinformationen durch ein mehrere Managementebenen aufweisendes Managementnetz, wobei die Zustandsinformationen für einen Informationsabgleich zwischen einem Agent einer Managementebene und zumindest einem Manager einer nächsthöheren Managementebene übertragen werden.

Die Prinzipien eines Managementnetzes, die auch als TMN-Prinzipien (Telecommunications Management Network) bezeichnet werden, definieren mehrere Managementebenen für das Management eines Kommunikationssystems - beispielsweise eines Mobil-Kommunikationssystems - , wobei jede Ebene eine doppelte Funktion hat. Im managenden System hat jede Ebene außer der untersten eine Manager-Funktion für die darunterliegende Ebene. Im gemanagten System hat jede Ebene außer der obersten eine Agenten-Funktion für die nächsthöhere Ebene.

Das Management von Zustandsinformationen ("State Management") stellt einen von mehreren TMN-Funktionsbereichen dar, der den Zustand eines gemanagten Objekts kennzeichnet. Ein gemanagtes Objekt ist eine logische Abstraktion einer Ressource im Kommunikationssystem. Hierbei wird unterschieden zwischen hardwarebezogenen gemanagten Objekten, die eine herstellerspezifische Realisierung einer Funktion beschreiben, und funktionsbezogenen gemanagten Objekten, bei denen es sich jeweils um die Abstraktion einer herstellerunabhängigen Funktionalität handelt. In einer objekt-orientierten Umgebung - wie zwischen Manager und Agent in einem Mobil-Kommunikationssystem - wird jede Agent-Funktionalität von einem bestimmten Objekt - als Instanz einer Objektklasse - bereitgestellt, das sowohl dem Agent als auch dem Manager bekannt ist. Der Managementzustand eines Objekts kann anhand von Zustandsinformationen gemäß dem Standard ITU-T X.731 beschrieben werden. Dabei wird jede Änderung des Zustands eines gemanagten Objekts vom Agent in entsprechenden Nachrichten zum Manager übertragen.

Wenn die Verbindung zwischen den beiden Managementebenen, also zwischen Agent und Manager, für eine bestimmte Zeit nicht mehr gewährleistet ist, muß der Agent die während dieses Intervalls aufgetretenen Zustandsänderungen zwischenspeichern, um sicherzustellen, daß nach dem Wiederherstellen der Kommunikationsmöglichkeit dem Manager möglichst schnell eine Übersicht über den aktuellen Zustand des Objekts zur Verfügung gestellt wird. Zu diesem Zweck wird ein Informationsabgleich (state realignment) zwischen Agent und Manager - beispielsweise bei einem neuen Verbindungsaufbau nach einem Verbindungsabbruch oder nach einer Initialisierung des Agenten oder des Managers - ausgeführt. Grundsätzlich spielt der Manager die aktive Rolle, indem er den Informationsabgleich triggert und vom Agent die Zustandsinformationen für jedes vorhandene Objekt anfordert und empfängt. Die Anforderung und Übertragung erfolgt immer für alle Agent-Objekte, d.h. unabhängig vom Inhalt der jeweiligen Zustandsinformationen zum Zeitpunkt der Abfrage durch den Manager. Bei einer größeren Anzahl gemanagter Objekte ist die Signalisierungslast erheblich und führt zu einer unerwünscht langen Dauer der Alignment-Prozedur.

In dem Dokument EP A 0,810,756 ist ein Verfahren offenbart, wie die Mitteilung von Zustandsänderungen einer Netzresource unterdrückt werden kann, wenn die Zuständsänderungen den Eindruck hervorrufen könnten, als wenn die Netzresource defekt wäre, obwohl sie lediglich nicht mehr so gut oder sicher wie normalerweise funktioniert. Dazu werden vom Manager bei der Zustandabfrage Schwellwerte übermittelt und die Zustände der abgefragten Netzresource nur dann mitgeteilt, wenn sie über den Schwellwerten liegen.

Das Dokument "SNMP, SNMPv2 and CMIP - the technologies for multisendor network management," Computer Communications 20 (1997), Seiten 73-88, offenbart ein Verfahren zur Behandlung von Zustands informationen in einem KommunikationsSystem, bei dem Zustands informationen von einem Agenten in einer Management Information Base gesammelt werden, und von einem Manager abgefragt werden können.

Aufgabe der Erfindung ist es, ein Verfahren und Kommunikationssystem zur Behandlung von Zustandsinformationen durch ein mehrere Managementebenen aufweisendes Managementnetz für einen verbesserten Informationsabgleich anzugeben.

Diese Aufgabe wird durch die Erfindung, dabei insbesondere durch die mit den Ansprüchen definierte Erfindung gelöst. Weiterbildungen der Erfindung sind den Unteransprüchen zu entnehmen.

Die Erfindung geht davon aus, daß Zustandsinformationen für einen Informationsabgleich zwischen einem Agent einer Managementebene und zumindest einem Manager einer nächsthöheren Managementebene übertragen werden. Gemäß dem Gegenstand der Erfindung wird von dem Manager eine Anforderungsnachricht zur Durchführung des Informationsabgleichs an den Agent gesendet. Von dem Agent werden die Zustandsinformationen hinsichtlich Abweichungen von einem Normalzustand überprüft und Änderungen der Zustandsinformationen in einer oder mehreren aufeinanderfolgenden Nachrichten an den Manager gesendet.

Durch den Erfindungsgegenstand erfolgt der Informationsabgleich nur, wenn geänderte Zustandsinformationen vorliegen, sodaß die Abweichungen vom Normalzustand dem Manager auf Anforderung vom Agent mitgeteilt werden. Es werden folglich nicht automatisch alle Zustandsinformationen übermittelt, unabhängig davon, ob sie sich geändert haben oder nicht. Daraus ergibt sich ein reduzierter Informationsfluß zwischen Agent und Manager, was bei einer Vielzahl von gemanagten Objekten seitens des Managers einen erheblichen Gewinn darstellt. Der Manager interessiert sich aber nur für die zum Informationsabgleich notwendigen Änderungen der Zustandsinformationen, sodaß nur diese Abweichungen ihm gemäß dem Gegenstand der Erfindung zur Verfügung gestellt werden. Folglich spart man sich die Übertragung der Zustandsinformationen, für die keine Abweichung vom Normalzustand seitens des Agent festgestellt wurde.

Gemäß einer Weiterbildung der Erfindung werden Zustandsattribute und/oder Statusattribute als Zustandsinformationen verwendet. Dabei wird vorzugsweise der Normalzustand anhand vorgebbarer Werte für die Zustandsattribute und/oder Statusattribute definiert. Durch die obigen Attribute können detaillierte Informationen über den geänderten Zustand jedes vorhandenen Objekts vom Manager abgerufen und vom Agent bereitgestellt werden.

Vorzugsweise werden Zustandsattribute zur Kennzeichnung der Betriebsbereitschaft, der Verwaltbarkeit und der Benutzung einer vom Agent betreuten Ressource im Kommunikationssystem als Zustandsinformationen verwendet. Des weiteren werden in vorteilhafterweise Statusattribute, die für eine vom Agent betreute Ressource im Kommunikationssystem angeben, ob sie sich in einem unbekannten Zustand, in einem Alarmzustand oder in einem Zustand der Verfügbarkeit befindet, als Zustandsinformationen verwendet. Durch die Übertragung lediglich der geänderten Attribute erhält der Manager nur die detaillierten, minimal erforderlichen Informationen, um den Informationsabgleich zwischen Manager und Agent herzustellen.

Es hat sich als günstig erwiesen, wenn von dem Manager in der Anforderungsnachricht eine Korrelationsinformation für eine Zuordnung der jeweiligen Anforderung zu den vom Agent empfangenen Nachrichten mit den geänderten Zustandsinformationen mitgesendet wird. Damit können mehrere Anforderungen zum Informationsabgleich simultan oder seriell ablaufen. Die parallele Lösung hat die Vorteile einer noch besseren Ausnutzung der Übertragungsressourcen auf der Schnittstelle der Agent-Manager-Beziehung sowie einer schnelleren Bereitstellung der geänderten Zustandsinformationen für die nächsthöhere Managementebene. Durch die Zuordnung anhand der eindeutigen, vom Manager vergebenen Korrelationsinformation besteht darüber hinaus die Möglichkeit, die eintreffenden Antworten des Agent mit den geänderten Zustandsinformationen auch bei einer Nichteinhaltung der Reihenfolge der richtigen Anforderung zuzuweisen. Nacheinander initiierte Anforderungen können sich nämlich gegenseitig überholen, so beispielsweise dann, wenn zwischen Agent und Manager ein Paketdatennetz durchlaufen wird. Der Agent kann mehrere Anforderungen parallel bearbeiten und unmittelbar danach ohne Rücksicht auf die Reihenfolge der gestarteten Anforderungen die Zustandsinformationen zum Informationsabgleich an den oder die Manager rücksenden.

Eine weitere vorteilhafte Weiterbildung der Erfindung sieht vor, daß von dem Agent in einer Nachricht zum Starten des Informationsabgleichs eine Korrelationsinformation für eine Zuordnung der nachfolgend gesendeten Nachrichten mit den geänderten Zustandsinformationen zu dem jeweils gestarteten Informationsabgleich mitgesendet wird. Durch die eindeutige, vom Agent vergebene Korrelationsinformation ist gewährleistet, daß die geänderten Zustandsinformationen verschiedener, simultan oder seriell ablaufender Informationsabgleiche unabhängig vom Zeitpunkt ihres Aussendens durch den Agent den Manager erreichen, der jeweils die empfangenen Zustandsinformationen weiterverarbeitet.

Gemäß einer besonders vorteilhaften Weiterbildung der Erfindung wird von dem Manager der Informationsabgleich abhängig von zumindest einem zum Agent gesendeten Parameter gesteuert. Der Vorteil des gegenüber der Basisfunktionalität parametrisierbaren Informationsabgleichs liegt darin, daß nur bestimmte Zustandsinformationen auf Grund des übermittelten Parameters übermittelt werden. Damit ergibt sich für den Manager eine Auswahlfunktion für eine Teilmenge aus allen Zustandsinformationen. Insbesondere die Möglichkeit der steuernden Beeinflussung des Abgleichs mit einfachen Mitteln und unter Anwendung standardisierter Nachrichten erhöht die Flexibilität des Managers und reduziert den Nachrichten- und Informationsfluß zusätzlich. Durch die parametrisierbare Alignment-Funktionalität für die Behandlung der Zustandsinformationen kann beispielsweise eine Auswahl der Ressourcen und/oder eine aktive Steuerung der Reihenfolge der angeforderten Informationen erzielt werden. Besonders die Kombination der Basisfunktionalität - Übertragung lediglich der Änderungen des Zustands auf Grund von Abweichungen gegenüber dem Normalzustand - mit der parametrisierbaren Alignment-Funktionalität führt zu einem besonders effektiven Verfahren und Kommunikationssystem, das eine optimale Nutzung der Übertragungsressourcen auf der Schnittstelle der Agent-Manager-Beziehung sowie ein schnellstmögliches Bereitstellen nur der vom Manager gewünschten Zustandsinformationen für die nächsthöhere Managementebene durch den Agent bewirkt.

Gemäß einer Weiterbildung der Erfindung wird von dem Manager ein Parameter gesendet, durch den der Informationsabgleich von dem Agent automatisch initiiert wird. Damit kann der Informationsabgleich vom Manager so gesteuert werden, daß er zu bestimmten Zeitpunkten vom Agent von selbst ausgelöst wird.

Gemäß weiterer vorteilhafter Weiterbildungen der Erfindung kann die Parametrisierung mit einem oder mehreren der folgenden, von dem Manager jeweils eingestellten Parameterwerten erfolgen. So wird ein Parameter von dem Manager mit Parameterwerten versehen, die einen Start-Zeitpunkt für den automatischen Informationsabgleich und/oder einen Ende-Zeitpunkt für den automatischen Informationsabgleich angeben. Andere Parameterwerte definieren
- ein Zeitintervall für eine Wiederholung des automatischen Informationsabgleichs,
- ausgewählte Ressourcen, für die geänderte Zustandsinformationen vom Agent zu übermitteln sind.
- den Abbruch eines laufenden Informationsabgleichs

Nachstehend wird die Erfindung anhand von Ausführungsbeispielen unter Bezugnahme auf die Figuren näher erläutert. Es zeigen
- FIG 1: das Blockschaltbild eines Managementnetzes für ein Mobil-Kommunikationssystem mit Agent-Manager- Beziehung zwischen einem Betriebs- und Wartungs- zentrum und einem oder mehreren Netzmanagementzen- tren,
- FIG 2: das Blockschaltbild des Managementnetzes gemäß Figur 1 mit Agent-Manager-Beziehung zwischen ei- nem Basisstationssystem und einem Betriebs- und Wartungszentrum zur Durchführung von zumindest zwei Anwendungen für das Basisstationssystem,
- FIG 3: das Blockschaltbild von Agent und Manager zur Be- handlung der Zustandsinformationen für parametri- sierbare Informationsabgleiche gemäß der Erfin- dung, und
- FIG 4: den Nachrichtenfluß zwischen dem Manager und dem Agent zur Steuerung des Informationsabgleichs.

Das Ausführungsbeispiel beschreibt die Erfindung anhand eines TMN-Konzepts für das Management eines Mobil-Kommunikationssystems, das beispielsweise Netzeinrichtungen eines Mobilfunknetzes nach dem GSM-Standard aufweist. Die Erfindung ist weder auf auf den GSM-Standard noch auf Mobilfunknetze beschränkt, sondern läßt sich auf Telekommunikationsnetze jeder Art und Betriebsweise, die ein TMN-Managementnetz nutzen, anwenden.

Ein Mobil-Kommunikationssystem ist ein hierarchisch gegliedertes System verschiedener Netzeinrichtungen, bei dem die unterste Hierarchiestufe von den Mobilstationen gebildet wird. Diese Mobilstationen kommunizieren über eine Funkschnittstelle mit die nächste Hierarchieebene bildenden Funkstationen, die als Basisstationen bezeichnet werden. Die beispielsweise Mobilstationen in einem Funkbereich einer Funkzelle versorgenden Basisstationen sind vorzugsweise zur Abdeckung eines größeren Funkgebiets zusammengefaßt und mit übergeordneten Netzeinrichtungen, den Basisstationssteuerungen verbunden. Die Basisstationen und Basisstationssteuerungen gehören zu einem Basisstationssystem (Base Station Subsystem) des Mobil-Kommunikationssystems. Die Basisstationssteuerungen kommunizieren über definierte Schnittstellen mit einer oder mehreren Vermittlungseinrichtungen, den Mobilvermittlungsstellen, über die u.a. auch der Übergang zu anderen Kommunikationsnetzen erfolgt. Die Mobilvermittlungsstellen bilden gemeinsam mit einer Mehrzahl von Datenbasen das Vermittlungssystem (Switching Subsystem) des Mobil-Kommunikationssystems.

Neben den obigen Netzeinrichtungen existieren ein oder mehrere Betriebs- und Wartungszentren (Operation and Maintenance Centers), die u.a. zum Konfigurieren und Überwachen der Netzeinrichtungen dient. Überwachungsmaßnahmen und Konfigurierungsmaßnahmen werden hierzu meist vom Betriebs- und Wartungszentrum aus ferngesteuert, die üblicherweise im Bereich der Mobilvermittlungsstellen angeordnet sind. Ein Betriebs-und Wartungszentrum kommuniziert dabei jeweils mit einem Basisstationssystem oder Vermittlungssysstem über eine definierte Schnittstelle. Eine weitere Aufgabe des Betriebs- und Wartungssystems ist das Management von Zustandsinformationen ("State Management"), das einen von mehreren Managementfunktionsbereichen darstellt und den Zustand eines gemanagten Objekts kennzeichnet. Ein gemanagtes Objekt ist eine logische Abstraktion einer physikalischen Ressource - d.h. einer Netzeinrichtung - im Mobil-Kommunikationssystem. Hierbei wird unterschieden zwischen hardwarebezogenen gemanagten Objekten, die eine herstellerspezifische Realisierung einer Funktion beschreiben, und funktionsbezogenen gemanagten Objekten, bei denen es sich jeweils um die Abstraktion einer herstellerunabhängigen Funktionalität handelt.

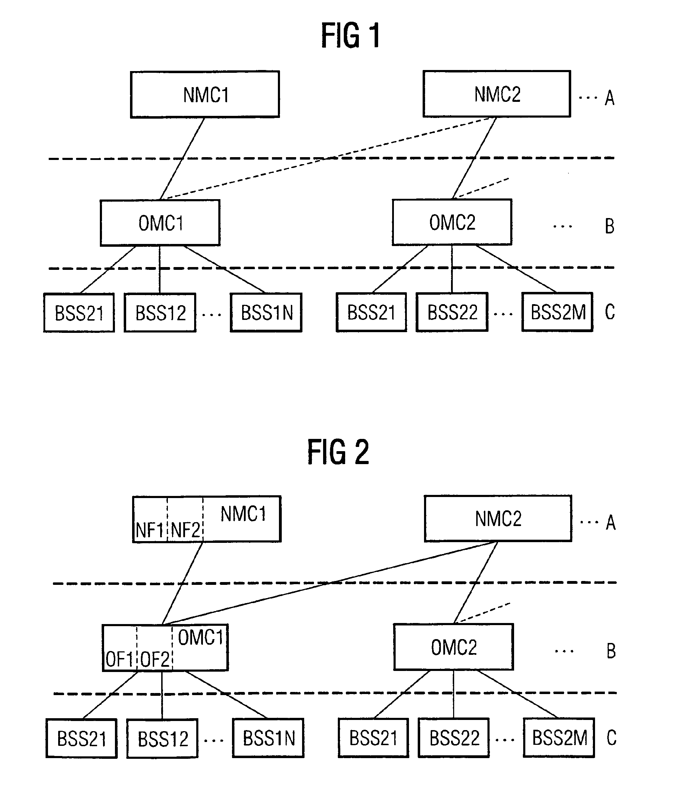

Für das Management des Mobil-Kommunikationssystems definieren die TMN-Prinzipien mehrere Ebenen ("Levels"), von denen im vorliegenden Beispiel drei Ebenen unter Bezugnahme auf die FIG 1 und FIG 2 nachfolgend erläutert werden.

Die FIG 1 und FIG 2 zeigen jeweils drei Ebenen A, B und C des Managementnetzes, von denen die Managementebene C die Netzeinrichtungsebene ("Network Element Level") mit mehreren Basisstationssystemen BSS11, BSS12...BSS1N sowie BSS21, BSS22 ...BSS2M enthält. Die Managementebene B kennzeichnet die Netzeinrichtungsmanagementebene ("Network Element Management Level"), in der Betriebs- und Wartungszentren OMC1 und OMC2 jeweils die herstellerspezifische Managementfunktionalität für einzelne Subsysteme, wie im vorliegenden Beispiel das Betriebs- und Wartungszentrum OMC1 für die Basisstationssysteme BSS11, BSS12 ...BSS1N und das Betriebs- und Wartungszentrum OMC2 für die Basisstationssysteme BSS21, BSS22...BSS2M, bereitstellen. Die Managementebene A kennzeichnet die Netzmanagementebene ("Network Management Level"), in der Netzmanagementzentren NMC1 und NMC2 jeweils eine integrierte, vom Hersteller unabhängige Management-Funktionalität realisieren. Dabei können mehrere Netzmanagementzentren einen Zugriff zu derselben Netzeinrichtung der nächstniedrigeren Managementebene B haben, im vorliegenden Beispiel die Netzmanagementzentren NMC1 und NMC2 der nächsthöheren Managementebene C zum Betriebs- und Wartungszentrum OMC1 der nächstniedrigeren Managementebene B. Zwischen den Netzeinrichtungen unterschiedlicher Managementebenen sind definierte Schnittstellen zur Informationsübertragung vorgesehen.

Der Unterschied in den Darstellungen gemäß den FIG 1 und FIG 2 liegt darin, daß eine Agent-Manager-Beziehung zur Behandlung von Zustandsinformationen für einen oder mehrere Informationsabgleiche (state alignment) in FIG 1 zwischen dem Betriebs- und Wartungszentrum OMC1 (Agent) und einem Netzmanagementzentrum NMC1 (Manager) oder mehreren - physikalisch getrennten - Netzmanagementzentren NMC1, NMC2 (Manager) sowie in FIG 2 zwischen dem Basisstationssystem BSS11 (Agent) und zwei verschiedenen Anwendungen OF1 und OF2 (Manager) in dem Betriebs- und Wartungszentrum OMC1 oder zwischen dem Betriebs- und Wartungszentrum OMC1 (Agent) und zwei verschiedenen Anwendungen NF1 und NF2 (Manager) in dem Netzmanagementzentrum NMC1 besteht. Um in den Netzmanagementzentren NMC1, NMC2 jederzeit einen Überblick über den Zustand gemanagter Objekte sicherzustellen, werden vom Betriebs- und Wartungszentrum OMC1 die - auf Grund von beispielsweise innerhalb der betreuten Basisstationssysteme BSS11...BSS1N auftretenden Ereignissen und Zuständen - gespeicherten Zustandsinformationen bereitgestellt und parallel zu beiden Managern auf Anforderung gesendet. Dies erfolgt vorzugsweise nach einem Verbindungsabbruch oder nach einer Initialisierung des Agent oder des Managers. Ebenso können mehrere Anforderungen auch hintereinander von einem einzelnen Manager, z.B. dem Netzmanagementzentrum NMC1 an den Agent, z.B. dem Betriebs-und Wartungszentrum OMC1, gerichtet werden. FIG 1 zeigt die Struktur für gemäß der Erfindung mehrfach ausgesendete Anforderungen zum Informationsabgleich, die im vorliegenden Beispiel parallel zwischen der Managementebene B, in der sich der Agent in Form des Betriebs- und Wartungszentrums OMC1 befindet, und der nächsthöheren Managementebene A, in der die Manager von zumindest zwei Netzmanagementzentren NMC1, NMC2 gebildet werden, ablaufen.

Um auch in der Managementebene B, z.B. in dem Betriebs- und Wartungszentrum OMC1 jederzeit einen Überblick über die Zustandssituation sicherzustellen, werden vom Basisstationssystem BSS11 die - auf Grund von beispielsweise innerhalb der betreuten Basisstationen und Basisstationssteuerungen auftretenden Ereignissen und Zuständen - gespeicherten Zustandsinformationen bereitgestellt und parallel zu mindestens zwei Managern des Betriebs- und Wartungszentrums OMC1 in Form der unterschiedlichen Anwendungen OF1 und OF2, die beide von ein-und derselben physikalischen Einrichtung OMC1 ausgeführt werden, gesendet. Dies erfolgt ebenfalls vorzugsweise nach einem Verbindungsabbruch oder nach einer Initialisierung des Agenten oder des Managers. Eine serielle Übertragung von mehrfach durch einen einzelnen Manager, z.B. dem Betriebs- und Wartungszentrum OMC1, initiierten Anforderungen an den Agent, z.B. dem Basisstationssystem BSS11, ist ebenfalls möglich. Alternativ oder zusätzlich kann eine-Agent-Manager Beziehung auch zwischen dem Betriebs- und Wartungszentrum OMC1 (ein Agent) und dem Netzmanagementzentrum NMC1 (ein Manager) zum seriellen Austausch von Anforderungen und Zustandsinformationen oder zum parallelen Austausch von Anforderungen und Zustandsinformationen für mindestens zwei unterschiedliche Anwendungen NF1 und NF2 (zwei Manager) im Netzmanagementzentrum NMC1 existieren. FIG 2 zeigt die Struktur für gemäß der Erfindung parallel ablaufende Informationsabgleiche zwischen der Managementebene B, in der sich die Manager als Anwendungen OF1 und OF2 befinden, und der nächstniedrigeren Managementebene C, in der sich der Agent befindet.

Sobald eine in der Managementebene C ausgefallene interne Schnittstelle wieder betriebsbereit ist, wird auf Anforderung des Managers/der Manager der Informationsabgleich, auch als Realignment-Prozedur oder Realignment-Verfahren bezeichnet, gestartet, wobei gemäß der Erfindung nur die auf Grund von Abweichungen gegenüber einem Normalzustand geänderten Zustandsinformationen agentseitig übermittelt werden. Dabei beginnt der Informationsabgleich im vorliegenden Beispiel zuerst zwischen dem Basisstationssystem, z.B. BSS11, und den Anwendungen OF1, OF2 im Betriebs- und Wartungszentrum OMC1 parallel und setzt sich anschließend zwischen dem Betriebs-und Wartungszentrum OMC1 und den übergeordneten Netzmanagementzentren NMC1, NMC2 parallel fort. Am Ende dieser Prozeduren ist die Zustandssituation sowohl im OMC als auch in den NMC wieder aktualisiert und aufeinander abgestimmt. Das Realignment-Verfahren kann selbstverständlich auf die Aktualisierung der Zustandsinformationen zwischen Agent und Managern in zwei unmittelbar angrenzenden Managementebenen, z.B. Ebene B und Ebene A, beschränkt sein.

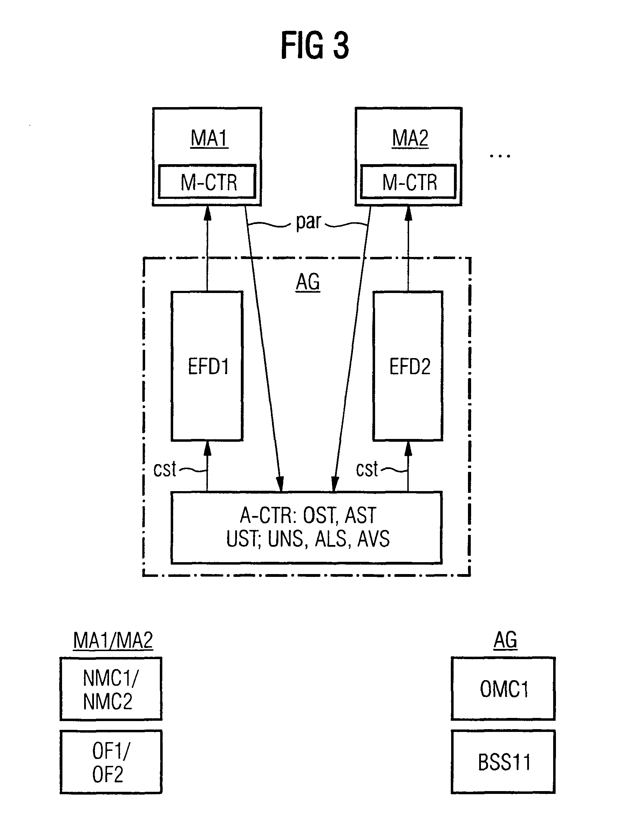

FIG 3 zeigt in schematischer Darstellung den Aufbau von Agent AG und Manager MA1, MA2 mit den zur Durchführung simultan - bei zwei oder mehreren Managern - oder seriell - bei nur einem Manager - ablaufender State-Realignment-Prozeduren erforderlichen Einrichtungen. Jeder Manager MA1, MA2 und Agent AG verfügt über eine Steuereinrichtung M-CTR bzw. A-CTR, die die Nachrichten für den Informationsabgleich generieren und auswerten können. Ebenso weisen sie - nicht näher dargestellte - Sende/Empfangseinrichtungen für das Versenden und Empfangen der Nachrichten sowie Speichereinrichtungen für das Speichern der Zustandsinformationen und anderer Nutz- und Signalisierungsinformationen auf.

Dabei generiert die Steuereinrichtung M-CTR des Manager eine Anforderungsnachricht, mit der der Agent zur Übermittlung der Zustandsinformationen aufgerufen wird, und fügt in diese Anforderungsnachricht vorzugsweise eine zur Zuordnung der Anforderung zu nachfolgend gesendeten Nachrichten benutzte Korrelationsinformation ein. Diese, von der Steuereinrichtung M-CTR vergebene Korrelationsinformation ist eindeutig. Über die Sende/Empfangseinrichtungen erfolgt die Übertragung der Anforderungsnachricht zum Agent. Darüber hinaus bindet die Einrichtung M-CTR des Managers zur Steuerung des Informationsabgleichs einen oder mehrere Parameter par in die jeweilige Anforderungsnachricht ein, um bestimmte Zustandsinformationen von ausgewählten Netzeinrichtungen gezielt anzufordern. Die jeweilige Anforderungsnachricht wird mit den Parametern par zum Agent AG gesendet. Insbesondere läßt sich anhand eines Parameters par der oder die Informationsabgleiche automatisieren, sodaß in durch ein Zeitintervall definierten Zeiträumen die Steuereinrichtung A-CTR des Agent den Abgleichvorgang von selbst wiederholt auslöst. Durch die parametrisierbare Alignment-Funktionalität hinsichtlich der Behandlung von Zustandsinformationen kann beispielsweise eine Auswahl der Ressourcen und/oder eine aktive Steuerung der Reihenfolge der angeforderten Informationen erzielt werden.

Die Steuereinrichtung A-CTR des Agent AG empfängt die Anforderungsnachricht mit den Parametern par, wertet sie aus, und überprüft die Zustandsinformationen hinsichtlich auftretender Abweichungen von einem Normalzustand. Ist dies der Fall, erzeugt die Steuereinrichtung A-CTR eine oder mehrere Nachrichten, in der nur die Änderungen der Zustandsinformationen für zumindest ein vorhandenes Objekt aufeinanderfolgend an den Manager MA1, MA2 bzw. die Steuereinrichtung M-CTR rückgesendet werden. Die Zustandsinformationen gemanagter Objekte umfassen vorzugsweise mehrere Zustandsattribute, von denen beispielhaft die Attribute OST (Operational State), AST (Administrative State) und UST (Usage State) zur Kennzeichnung der Betriebsbereitschaft, der Verwaltbarkeit und der Benutzung einer vom Agent betreuten und mit dem Objekt assoziierten Ressource im Kommunikationssystem angegeben sind. Die Zustandsinformationen umfassen vorzugsweise auch mehrere Statusattribute, von denen die Attribute UNS (Unknown Status), ALS (Alarm Status) und AVS (Available Status) definiert sind. Dabei geben sie für das jeweilige Objekt bzw. für die jeweilige Ressource im Kommunikationssystem an, ob sie sich in einem unbekannten Zustand (UNS), in einem Alarmzustand (ALS) oder in einem Zustand der Verfügbarkeit (AVS) befindet.

Das Zustandsattribut OST kann die Werte "betriebsbereit (enabled) "oder" nicht betriebsbereit (disabled)" annehmen, wobei aus Managersicht diese Zustandsinformation lesbar, aber nicht veränderbar ist. Das Zustandsattribut AST kann die Werte "freigegeben durch den Manager (unlocked) "oder" gesperrt durch den Manager (locked)" oder "gesperrt (shutting down)" annehmen, wobei letztgenannter Zustandswert bedeutet, daß für den Fall eines aktuell beendeten Betriebs keine neuen Dienste mehr von der Ressource angenommen werden. Aus Managersicht ist diese Zustandsinformation lesbar und veränderbar. Das Zustandsattribut UST kann die Werte "benutzt, freie Kapazität (active)" oder "benutzt, keine freie Kapazität (busy)" oder "nicht benutzt (idle)" annehmen, wobei aus Managersicht diese Zustandsinformation nur lesbar, aber nicht veränderbar ist. Der Normalzustand, der zur Prüfung des Vorliegens von Abweichungen und damit von geänderten Zustandsinformationen angewendet wird, ist einstellbar durch einen Wert (default), der sich aus einer Kombination obiger Einzelwerte, beispielsweise "betriebsbereit", "freigegeben durch den Manager" und "nicht benutzt", ergibt. Dies bedeutet, daß nur die geänderten Zustandsinformationen gemanagter Objekte vom Agent zum Manager übertragen werden, deren Zustand sich von dem oben definierten Normalzustand unterscheidet. Alle übrigen Zustandsinformationen, d.h. von Objekten im Normalzustand, bleiben unberücksichtigt und werden nicht übersandt.

Neben diesen Zustandsattributen definieren die Statusattribute UNS, ALS und AVS in detaillierterer Form den Zustand der mit dem Objekt assoziierten Ressource hinsichtlich Betriebsbereitschaft, momentane Benutzung und Verwaltbarkeit. So ist das Statusattribut UNS auf den Wert "true" gesetzt, wenn das Zustandsattribut OST oder das Zustandsattribut AST nicht unterstützt wird. Der Wert des jeweiligen Zustandsattributs OST, AST ist dabei unerheblich. Das Statusattribut ALS stellt einen Gesamtindikator für den Alarmzustand einer Ressource dar und ist vom Manager nur lesbar, nicht beeinflußbar. Das Attribut nimmt den binären Wert "eins" bei Alarmzustand und den binären Wert "null" im Normalzustand ein. Das Statusattribut AVS kann keinen oder mehrere Werte aus einem definierten Satz von Einzelwerten annehmen und ist für den Manager ebenfalls nur lesbar. Der Normalzustand ist durch eine leere Wertemenge (empty set) gekennzeichnet.

Die in der Speichereinrichtung des Agent AG eingetragenen Zustandsinformationen werden von der Steuereinrichtung A-CTR überprüft und nur die geänderten Zustandsinformationen cst (changed status) zur Steuereinrichtung M-CTR des Managers ausgesendet.

Dabei wird die von der Steuereinrichtung M-CTR des Managers MA1, MA2 in die Anforderungsnachricht eingetragene eindeutige Korrelationsinformation zur Korrelation der Anforderungen benutzt, während mit einer weiteren Korrelationsinformation die Zuordnung der nachfolgend vom Agent gesendeten Nachrichten (state change notifications) zu dem jeweils gestarteten "State-Realignment" bewirkt wird. Auch die vom Agent AG bzw. dessen Steuereinrichtung A-CTR vergebene Korrelationsinformation ist eindeutig und wird in die nächsthöhere Managementebene vorzugsweise in der jeweiligen Nachricht zusammen mit den geänderten Zustandsinformationen cst gesendet. Durch die Verwendung der Korrelationsinformationen ist eine eindeutige Zuordnung simultan oder seriell durchgeführter Informationsabgleiche zu mehreren Managern oder einem einzelnen Manager möglich.

Wahlweise können im Agent AG mehrere, jeweils den Managern MA1, MA2 zuordenbare und von ihnen steuerbare Filterfunktionen EFD1, EFD2 (Event Forwarding Discriminators) mit Filterkriterien für die vom Agent AG erzeugten Nachrichten mitbenutzt werden, sodaß die Nachrichten mit den geänderten Zustandsinformationen cst nur bei Erfüllen der Filterkriterien zu den Managern MA1, MA2 geroutet werden. Die Steuereinrichtung M-CTR des Managers ist in der Lage, derartige Filterfunktionen im Agent AG einzurichten, zu löschen und die Filterkriterien festzulegen, um je nach seinen individuellen Anforderungen den Nachrichtenfluß steuern zu können. Daher kann der Fall auftreten, daß die Filterfunktions-Einstellung von Manager zu Manager unterschiedlich ist, sodaß durch die simultan ablaufenden Realignment-Prozeduren inhaltlich verschiedene Zustandsinformationen behandelt werden.

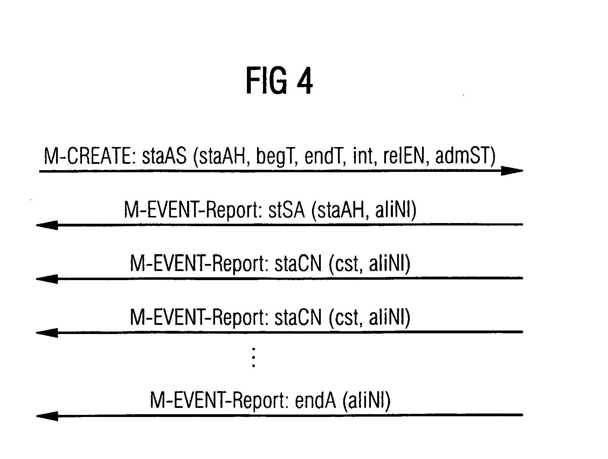

FIG 4 zeigt den Nachrichtenfluß zwischen einem Agent AG - im dargestellten Beispiel gemäß der FIG 1 dem Betriebs- und Wartungszentrum OMC1 oder im dargestellten Beispiel der FIG 2 dem Basisstationssystem BSS11 - und dem Manager MA1, MA2 - im Beispiel gemäß der FIG 1 den unterschiedlichen Netzmanagementzentren NMC1, NMC2 oder im Beispiel der FIG 2 den verschiedenen Applikationen OF1, OF2.

Der Nachrichtenfluß erfolgt vorzugsweise mit standardisierten M-EVENT-REPORT Services sowie einem zu Anfang initiierten M-CREATE Service. Dieses sind generische CMISE-standardisierte (Common Management Information Service Element) Prozeduren, die gemäß ITU-T X.710 definiert sind. Die ITU-T X.731 definiert das Management einer standardisierten Übertragung von Zustandsinformationen, die gemäß den M-EVENT-REPORT Services durchgeführt wird. Die Korrelationsinformationen werden in die Nachrichten bzw. in bestimmte Nachrichtenfelder eingetragen. Des weiteren versehen die Manager MA1, MA2 die Parameter zur Steuerung des Informationsabgleichs mit bestimmten Parameterwerten und tragen sie einzeln oder mehrfach in die jeweilige Anforderungsnachricht ein. Das Beispiel in FIG 4 zeigt den Nachrichtenfluß anhand einzelner Nachrichten, wobei diese parallel zwischen dem Agent AG und den Managern MA1, MA2 oder seriell zwischen dem Agent AG und dem einzelnen Manager MA1 übertragen werden können.

Sobald nach einer Unterbrechung der Verbindung die Kommunikation zwischen dem Manager MA1, MA2 und dem Agent AG wiederhergestellt ist, sendet jeder Manager MA1, MA2 gemäß dem M-CREATE Service eine Anforderungsnachricht staAS (start Alignment Scheduler) zum Übermitteln der Zustandsinformationen für den Informationsabgleich an den Agent AG. Vorzugsweise wird die vom Manager MA1, MA2 definierte Korrelationsinformation staAH (state Alignment Handle) - beispielsweise im definierten Nachrichtenfeld "actionInformation" - mitgesendet, die eine direkte Zuordnung der Anforderung zu den nachfolgend empfangenen Agent-Nachrichten kennzeichnet. Damit ist bei mehreren Managern die aktuelle Anforderung auch dem jeweiligen Manager zuordenbar, sodaß die parallelen Realignments der Manager voneinander unabhängig initiiert, durchgeführt und beendet werden können.

Die Anforderungsnachricht staAS enthält auch vom Manager eingetragene Parameterwerte für den nachfolgenden Funktionsablauf. Die Parametrisierung kann vorzugsweise mit einem oder mehreren eingestellten Parameterwerten durchgeführt werden, von denen die Werte begT (begin Time), endT (end Time), int (interval), admST (administrative State) und relEN (related Entities) beispielhaft angegeben sind. Durch die spezifischen Parameterwert werden beschrieben:
- ein Start-Zeitpunkt (begT), beispielsweise Datum und Uhrzeit, für einen automatischen Informationsabgleich und/oder ein Ende-Zeitpunkt (endT), beispielsweise Datum und Uhrzeit, für den automatischen Informationsabgleich,
- ein Zeitintervall (int), beispielsweise in Minuten, Stunden, Tagen usw., für eine Wiederholung des automatischen Informationsabgleichs,
- ausgewählte Ressourcen (relEN), für die die geänderten Zustandsinformationen vom Agent zu übermitteln sind,
- den Abbruch (admST) eines laufenden Informationsabgleichs, wobei nach - auch ein Wiederfortsetzen der Alignment-Prozudur
- mit dem Wert admST=unlock - möglich ist. Die Parameterwerte begT...admST sind in einem gemäß dem Standard vorgegebenen Nachrichtenfeld des M-CREATE Service enthalten, um bereits vorhandene und definierte Felder mitbenutzen zu können.

Im Anschluß an die Auswertung der Parameter in der empfangenen Anforderungsnachricht staAS überprüft der Agent, ob Änderungen der Zustandsinformationen anhand von Abweichungen gegenüber dem Normalzustand vorliegen und bereitet für jedes gemanagte Objekt, das sich nicht im Normalzustand befindet, die geänderten Zustandsinformationen auf. Dies erfolgt vorzugsweise mit den Zustands- und Statusattributen gemäß der Beschrebung zu FIG 3. Der Agent AG führt den Informationsabgleich fort, indem er eine Startnachricht stSA (start State Alignment) erzeugt und die von ihr definierte Korrelationsinformation aliNI (alignment Notification Id) in diese Nachricht einfügt. Auch die von dem Manager vergebene und übersandte Korrelationsinformation staAH ist in einem bestimmten Nachrichtenfeld der Startnachricht stSA enthalten. Die Korrelationsinformation aliNI ist beispielsweise in dem standardisierten Nachrichtenfeld "notification Identifier" der Nachricht stSA eingetragen. Beide Informationen staAH, aliNI werden gemeinsam in der Nachricht stSA vom Agent AG zu den Managern MA1, MA2 ausgesendet. Dadurch können "alignmentbezogene" M-EVENT-REPORT Nachrichten verschiedener M-CREATE Anforderungen voneinander unterschieden werden, aber auch von regulären M-EVENT-REPORT Nachrichten, die mit dem Informationsabgleich nichts zu tun haben. Eine Alignment-Prozedur stoppt nämlich nicht zwingend andere M-EVENT-REPORT Nachrichten, die während der Alignment-Prozedur spontan auftreten und an den oder die Manager gesendet werden.

Nach dem - vorzugsweise vom Manager MA1, MA2 durch zumindest einen Parameter gesteuerten automatischen Start des Informationsabgleichs - sendet der Agent AG in aufeinanderfolgenden Nachrichten staCN (state change notification) unter Verwendung des M-EVENT-REPORT Service nur die aufbereiteten geänderten Zustandsinformationen cst zum anfordernden Manager MA1, MA2 zurück. Vorzugsweise wird in einer Nachricht staCN nur die für ein Objekte und die damit assoziierte Ressource ermittelten Zustandsänderungen cst übertragen, sodaß bei mehreren, gegebenenfalls unterschiedlichen Objekten auch mehrere Nachrichten staCN benötigt werden. Dabei weist jede Nachricht staCN die Korrelationsinformation aliNI - beispielsweise in dem definierten Nachrichtenfeld "correlated Notifications" - auf. Nach der letzten M-EVENT-REPORT Nachricht jedes Informationsabgleichs generiert der Agent AG eine Endenachricht endA (end Alignment), die die Korrelationsinformation aliNI enthält. Für den Fall, daß zum Zeitpunkt des M-CREATE Service alle gemanagten Objekte sich im Normalzustand befinden oder wenn die Nachrichten mit den Zustandsänderungen von den aktuellen Filtereinstellungen aussortiert werden, folgt die Endenachricht endA unmittelbar auf die Startnachricht stSA. Der obige Nachrichtenfluß wiederholt sich für jedes "State-Alignment", bis das Ende des automatischen Informationsabgleichs - erkennbar am Parameterwert endT - erreicht ist. Auch wenn das zu FIG 4 beschriebene Beispiel sich auf parallel Realignments zu mehreren Managern bezieht, kann der Nachrichtenfluß selbstverständlich auf mehrere, von einem einzigen Manager nacheinander ausgelöste Anforderungen für die Behandlung von Zustandsinformationen gemäß dem "State-Alignment" angewendet werden. Dies bringt den Vorteil mit sich, daß durch die eindeutige Zuordnung anhand der Korrelationsinformationen für den einzelnen Manager die Möglichkeit besteht, die eintreffenden Antworten des Agent auch bei Nichteinhalten der Reihenfolge eindeutig den Anforderungen zuordnen zu können - beispielsweise unterschiedlichen Anwendungen im Manager. Nacheinander gesendete Anforderungen können sich gegebenenfalls gegenseitig überholen, beispielsweise dann, wenn zwischen Agent und Manager ein Paketnetz durchlaufen wird.

## Patentansprüche

1. Verfahren zur Behandlung von Zustandsinformationen in einem Kommunikationssystem durch ein mehrere Managementebenen (A, B, C) aufweisendes Managementnetz, wobei die Zustandsinformationen für einen Informationsabgleich zwischen einem Agent (AG) einer Managementebene (B, C) und zumindest einem Manager (MA1, MA2) einer höheren Managementebene (A, B) übertragen werden, bei dem
- von zumindest einem der Manager eine Anforderungsnachricht (staAS) zur Durchführung des Informationsabgleichs an den Agent gesendet wird, und
- daraufhin von dem Agent nur diejenigen Zustandsinformationen in einer oder mehreren aufeinanderfolgenden Nachrichten (staCN) an zumindest einen der Manager gesendet werden, bei denen von dem Agenten eine Abweichung von einem Normalzustand der Zustandsinformationen festgestellt wurde.

2. Verfahren nach Anspruch 1,
bei dem Zustandsattribute (OST, AST, UST) und/oder Statusattribute (UNS, ALS, AVS) als Zustandsinformationen verwendet werden.

3. Verfahren nach Anspruch 2,
bei dem der Normalzustand anhand vorgebbarer Werte für die Zustandsattribute und/oder Statusattribute definiert wird.

4. Verfahren nach einem der Ansprüche 2 oder 3,
bei dem die Zustandsattribute zur Kennzeichnung der Betriebsbereitschaft, der Verwaltbarkeit und der Benutzung einer vom Agent betreuten Ressource im Kommunikationssystem dienen.

5. Verfahren nach einem der Ansprüche 2 bis 4,
bei dem die Statusattribute für eine vom Agent betreute Ressource im Kommunikationssystem angeben, ob sie sich in einem unbekannten Zustand, in einem Alarmzustand oder in einem Zustand der Verfügbarkeit befindet.

6. Verfahren nach einem der vorhergehenden Ansprüche,
bei dem von dem Manager in der Anforderungsnachricht eine Korrelationsinformation (staAH) für eine Zuordnung der jeweiligen Anforderung zu den vom Agent empfangenen Nachrichten mit den geänderten Zustandsinformationen mitgesendet wird.

7. Verfahren nach einem der vorhergehenden Ansprüche,
bei dem von dem Agent in einer Nachricht (stSA) zum Starten des Informationsabgleichs eine Korrelationsinformation (aliNI) für eine Zuordnung der nachfolgend gesendeten Nachrichten (staCN) mit den geänderten Zuatandsinformationen zu dem jeweils gestarteten Informationsabgleich mitgesendet wird.

8. Verfahren nach Anspruch 7,
bei dem die vom Agent erzeugte Korrelationsinformation (aliNI) in der oder den Nachrichten (staCN) mit den geänderten Zustandsinformationen mitgesendet wird.

9. Verfahren nach einem der vorhergehenden Ansprüche,
bei dem von dem Manager der Informationsabgleich abhängig von zumindest einem zum Agent gesendeten Parameter (par) gesteuert wird.

10. Verfahren nach Anspruch 9,
bei dem durch einen Parameter der Informationsabgleich von dem Agent automatisch initiiert wird.

11. Verfahren nach Anspruch 10,
bei dem ein Parameter von dem Manager mit einem Parameterwert (begT) versehen wird, der einen Start-Zeitpunkt für den automatischen Informationsabgleich angibt.

12. Verfahren nach einem der Ansprüche 9 bis 11,
bei dem ein Parameter von dem Manager mit einem Parameterwert (endT) versehen wird, der einen Ende-Zeitpunkt für den automatischen Informationsabgleich angibt.

13. Verfahren nach einem der Ansprüche 9 bis 12,
bei dem ein Parameter von dem Manager mit einem Parameterwert (int) versehen wird, der ein Zeitintervall für eine Wiederholung des automatischen Informationsabgleichs angibt.

14. verfahren nach einem der Ansprüche 9 bis 13,
bei dem ein Parameter von dem Manager mit einem Parameterwert (relEN) versehen wird, der die Ressourcen kennzeichnet, für die geänderte Zustandsinformationen vom Agent zu übermitteln sind.

15. Verfahren nach einem der Ansprüche 9 bis 14,
bei dem ein Parameter (par) von dem Manager (MA1, MA2) mit einem Parameterwert (admS) versehen wird, durch den ein laufender Informationsabgleich unterbrochen werden kann.

16. Verfahren nach einem der Ansprüche 9 bis 15,
bei dem von dem Manager (MA1, MA2) der oder die Parameter (par) in der Anforderungsnachricht (staAS) zu dem Agent (AG) gesendet werden.

17. Verfahren nach einem der vorstehenden Ansprüche,
bei dem die Kommunikationsmöglichkeit wegen eines Verbindungsabbruchs und/oder einer Initialisierung des Agenten und/oder des Managers nicht gewährleistet ist.

18. Kommunikationssystem zur Durchführung eines der vorstehenden Verfahren.

19. Verfahren nach einem der vorstehenden Verfahrensansprüche, bei dem der Normalzustand einstellbar ist.

20. Verfahren nach einem der vorstehenden Verfahrensansprüche, bei dem sich der Normalzustand aus einer Kombination von einzelnen Werten der Zustandsinformationen ergibt.

21. Agent (AG) einer Managementebene (B, C) zur Behandlung von Zustandsinformationen in einem Kommunikationssystem mit einem mehrere Managementebenen (A, B, C) aufweisenden Managementnetz, wobei die Zustandsinformationen für einen Informationsabgleich zwischen dem Agenten und zumindest einem Manager (MA1, MA2) einer höheren Managementebene (A, B) übertragen werden, umfassend Mittel
- zum Empfangen einer von zumindest einem der Manager an den Agent gesendeten Anforderungsnachricht (staAS) zur Durchführung des Informationsabgleichs, und
- zum daraufhin Senden von nur diejenigen Zustandsinformationen in einer oder mehreren aufeinanderfolgenden Nachrichten (staCN) an zumindest einen der Manager, bei denen von dem Agenten eine Abweichung von einem Normalzustand der Zustandsinformationen festgestellt wurde.

22. Manager (MA1, MA2) einer höheren Managementebene (A, B) zur Behandlung von Zustandsinformationen in einem Kommunikationssystem mit einem mehrere Managementebenen (A, B, C) aufweisenden Managementnetz, wobei die Zustandsinformationen für einen Informationsabgleich zwischen einem Agenten einer Managementebene (B, C) und zumindest dem Manager (MA1, MA2) übertragen werden, umfassend Mittel
- zum Senden einer Anforderungsnachricht (staAS) zur Durchführung des Informationsabgleichs an den Agenten, gemäß dem von dem Angenten nur diejenigen Zustandsinformationen an zumindest den Manager gesendet werden sollen, bei denen von dem Agenten eine Abweichung von einem Normalzustand der Zustandsinformationen festgestellt wird,
- zum Empfangen von einer oder mehreren aufeinanderfolgenden Nachrichten, mit denen von dem Agenten auf den Empfang einer von einem der Manager an den Agenten gesendeten Anforderungsnachricht (staAS) zur Durchführung des Informationsabgleichs nur diejenigen Zustandsinformationen an zumindest einen der Manager gesendet werden, bei denen von dem Agenten eine Abweichung von einem Normalzustand der Zustandsinformationen festgestellt wurde, und
- zum damit Abgleichen von Zustandsinformationen, die sowohl dem Manager als auch dem Agenten bekannt sind, so dass die dem Manager bekannten Zustandsinformationen den aktuellen Zustandsinformationen des Agenten entsprechen.

## Claims

1. A method for processing state information in a communication system through a management network having a number of management levels (A, B, C), with the state information being transmitted for a synchronisation of information between an agent (AG) of a management level (B, C) and at least one manager (MA1, MA2) of a higher management level (A, B), in which
- a request message (staAS) for synchronising the information is sent by at least one of the managers to the agent, and
- in response, only that state information is sent by the agent in one or more consecutive messages (staCN) to at least one of the managers for which a deviation from a normal state of the state information was established by the agent.

2. Method according to claim 1
In which state attributes (OST, AST, UST) and/or status attributes (UNS, ALS, AVS) are used as state information.

3. Method according to claim 2,
In which the normal state is defined on the basis of predeterminable values for the state attributes and/or status attributes.

4. Method according to one of claims 2 or 3,
in which the state attributes that serve to identify the operational readiness, ability to be managed and the use of a resource looked after by an agent in the communication system.

5. Method according to one of claims 2 to 4,
in which the status attributes for a resource looked after by an agent in the communication system specify whether it is in an unknown state, in an alarm state or in a state of availability.

6. Method according to one of the previous claims,
In which correlation information (staAH) for an assignment of the respective request to the messages received by the agent is sent along with the modified state information by the manager in the request message.

7. Method according to one of the previous claims,
In which, in a message (stSA) for starting information synchronisation, correlation information (aliNI) for an assignment of the subsequently sent messages (staCN) is sent along with the changed state information for the information synchronisation started in each case.

8. Method according to claim 7,
in which the correlation information (aliNI) created by the agent is sent in the message or messages (staCN) along with the changed state information.

9. Method according to one of the previous claims,
In which the information synchronisation is controlled by the manager depending on at least one parameter (par) sent to the agent.

10. Method according to claim 9,
In which the information is automatically initiated by the agent through a parameter.

11. Method according to claim 10,
in which a parameter is provided by the manager with a parameter value (begT) which specifies a begin time for the automatic information synchronisation.

12. Method according to one of claims 9 to 11,
in which a parameter is provided by the manager with a parameter value (endT) which specifies an end time for the automatic information synchronisation.

13. Method according to one of claims 9 to 12,
in which a parameter is provided by the manager with a parameter value (int) which specifies a time interval for a repetition of the automatic information synchronisation.

14. Method according to one of claims 9 to 13,
in which a parameter is provided by the manager with a parameter value (relEN) which identifies the resources for which changed state information is to be transferred by the agent.

15. Method according to one of claims 9 to 14,
in which a parameter (par) is provided by the manager (MA1, MA2) with a parameter value (admS) through which an ongoing information synchronisation can be interrupted.

16. Method according to one of claims 9 to 15,
In which the parameter or parameters (par) is or are sent by the manager in the request message (staAS) to the agent (AG).

17. Method according to one of the previous claims,
In which the possibility of communication is not guaranteed because of a connection break and/or an initialisation of the agent and/or of the manager.

18. Communication system for carrying out one of the previous methods.

19. Method according to one of the previous claims in which the normal state is able to be set.

20. Method according to one of the previous claims in which the normal state is produced from a combination of individual values of the state information.

21. Agent (AG) of a management level (B, C) for handling state information in a communication system with a management network comprising a number of management levels (A, B, C), with the state information being transmitted for an information synchronisation between the agent and at least one manager (MA1, MA2) of a higher management level (A, B), comprising means
- for receiving a request message (staAS) for carrying out the information synchronisation sent by at least one of the managers to the agent, and
- for subsequently sending only that state information in one or more consecutive messages (staCN) to at least one of the managers in which a deviation was established by the agent from a normal state of the state information.

22. Manager (MA1, MA2) of a higher management level (A, B) for handling state information in a communication system with a management network featuring a number of management levels (A, B, C), with the state information being transmitted for information synchronisation between an agent of a management level (B, C) and at least the manager (MA1, MA2), comprising means
- for sending a request message (staAS) for carrying out the information synchronisation to the agent according to which only that state information is to be sent by the agent to at least the manager in which a deviation from a normal state of the state information is established by the agent,
- for receiving one or more consecutive messages with which the agent, on receipt of a request message (staAS), sent by the manager to the agent for executing the information synchronisation, only sends that state information to at least one of the managers for which the agent has established a deviation from a normal state of the state information, and
- to thus synchronise state information which is known to both the manager and also the agent, so that the state information known to the manager corresponds to the actual state information of the agent.

## Revendications

1. Procédé pour traiter des informations d'état dans un système de communication par l'intermédiaire d'un réseau de gestion présentant plusieurs niveaux de gestion (A, B, C), les informations d'état étant transmises entre un agent (AG) d'un niveau de gestion (B, C) et au moins un gestionnaire (MA1, MA2) d'un niveau de gestion supérieur (A, B) pour une mise en correspondance d'informations, dans lequel
- un message de demande (staAS) d'exécution de la mise en correspondance d'informations est envoyé à l'agent par au moins un des gestionnaires et
- suite à cela, l'agent envoie à au moins un des gestionnaires, dans un ou plusieurs messages successifs (staCN), uniquement les informations d'état pour lesquelles l'agent a constaté un écart par rapport à un état normal des informations d'état.

2. Procédé selon la revendication 1, dans lequel des attributs d'état (OST, AST, UST) et/ou des attributs de statut (UNS, ALS, AVS) sont utilisés en tant qu'informations d'état.

3. Procédé selon la revendication 2, dans lequel l'état normal est défini sur la base de valeurs pouvant être définies par défaut pour les attributs d'état et/ou les attributs de statut.

4. Procédé selon l'une des revendications 2 ou 3, dans lequel les attributs d'état servent à caractériser l'état de service, la facilité de gestion et l'utilisation d'une ressource prise en charge par l'agent dans le système de communication.

5. Procédé selon l'une des revendications 2 à 4, dans lequel les attributs de statut pour une ressource prise en charge par l'agent dans le système de communication indiquent si elle se trouve dans un état inconnu, dans un état d'alarme ou dans un état de disponibilité.

6. Procédé selon l'une des revendications précédentes, dans lequel le gestionnaire envoie dans le message de demande, en même temps que les informations d'état modifiées, une information de corrélation (staAH) pour une association de la demande respective aux messages reçus par l'agent.

7. Procédé selon l'une des revendications précédentes, dans lequel l'agent envoie, dans un message (stSA) de démarrage de la mise en correspondance d'informations, une information de corrélation (aliNI) pour une association des messages envoyés par la suite (staCN), en même temps que les informations d'état modifiées relatives à la mise en correspondance d'informations démarrée à chaque fois.

8. Procédé selon la revendication 7, dans lequel l'information de corrélation (aliNI) produite par l'agent est envoyée dans le ou les messages (staCN) en même temps que les informations d'état modifiées.

9. Procédé selon l'une des revendications précédentes, dans lequel la mise en correspondance d'informations est commandée par le gestionnaire en fonction d'au moins un paramètre (par) envoyé à l'agent.

10. Procédé selon la revendication 9, dans lequel la mise en correspondance d'informations est automatiquement initiée par l'agent au moyen d'un paramètre.

11. Procédé selon la revendication 10, dans lequel un paramètre est pourvu, par le gestionnaire, d'une valeur de paramètre (begT) qui indique un instant de démarrage pour la mise en correspondance d'informations automatique.

12. Procédé selon l'une des revendications 9 à 11, dans lequel un paramètre est pourvu, par le gestionnaire, d'une valeur de paramètre (endT) qui indique un instant d'arrêt pour la mise en correspondance d'informations automatique.

13. Procédé selon l'une des revendications 9 à 12, dans lequel un paramètre est pourvu, par le gestionnaire, d'une valeur de paramètre (int) qui indique un intervalle de temps pour une répétition de la mise en correspondance d'informations automatique.

14. Procédé selon l'une des revendications 9 à 13, dans lequel un paramètre est pourvu, par le gestionnaire, d'une valeur de paramètre (relEN) qui caractérise les ressources pour lesquelles des informations d'état modifiées doivent être communiquées par l'agent.

15. Procédé selon l'une des revendications 9 à 14, dans lequel un paramètre (par) est pourvu, par le gestionnaire (MA1, MA2), d'une valeur de paramètre (admS) grâce à laquelle une mise en correspondance d'informations en cours peut être interrompue.

16. Procédé selon l'une des revendications 9 à 15, dans lequel le gestionnaire (MA1, MA2) envoie le ou les paramètres (par) à l'agent (AG) dans le message de demande (staAS).

17. Procédé selon l'une des revendications précédentes, dans lequel la possibilité de communication n'est pas garantie en raison d'une interruption de liaison et/ou d'une initialisation de l'agent et/ou du gestionnaire.

18. Système de communication pour l'exécution de l'un des procédés précédents.

19. Procédé selon l'une des revendications de procédé précédentes, dans lequel l'état normal peut être réglé.

20. Procédé selon l'une des revendications de procédé précédentes, dans lequel l'état normal est obtenu à partir d'une combinaison de valeurs individuelles des informations d'état.

21. Agent (AG) d'un niveau de gestion (B, C) pour le traitement d'informations d'état dans un système de communication comprenant un réseau de gestion qui présente plusieurs niveaux de gestion (A, B, C), les informations d'état étant transmises entre l'agent et au moins un gestionnaire (MA1, MA2) d'un niveau de gestion supérieur (A, B) pour une mise en correspondance d'informations, comprenant des moyens
- pour la réception d'un message de demande (staAS) d'exécution de la mise en correspondance d'informations envoyé à l'agent par au moins un des gestionnaires et
- pour, suite à cela, envoyer à au moins un des gestionnaires, dans un ou plusieurs messages successifs (staCN), uniquement les informations d'état pour lesquelles l'agent a constaté un écart par rapport à un état normal des informations d'état.

22. Gestionnaire (MA1, MA2) d'un niveau de gestion supérieur (A, B) pour traiter des informations d'état dans un système de communication comprenant un réseau de gestion présentant plusieurs niveaux de gestion (A, B, C), les informations d'état étant transmises entre un agent d'un niveau de gestion (B, C) et au moins le gestionnaire (MA1, MA2) pour une mise en correspondance d'informations, comprenant des moyens
- pour envoyer à l'agent un message de demande (staAS) d'exécution de la mise en correspondance d'informations en vertu de laquelle l'agent ne doit envoyer, au moins au gestionnaire, que les informations d'état pour lesquelles l'agent constate un écart par rapport à un état normal des informations d'état,
- pour la réception d'un ou plusieurs messages successifs grâce auxquels l'agent envoie à au moins un des gestionnaires, à réception d'un message de demande (staAS) d'exécution de la mise en correspondance d'informations envoyé à l'agent par un des gestionnaires, uniquement les informations d'état pour lesquelles l'agent a constaté un écart par rapport à un état normal des informations d'état et
- pour la mise en correspondance, ainsi, d'informations d'états qui sont connues non seulement du gestionnaire, mais également de l'agent, de manière à ce que les informations d'état connues du gestionnaire correspondent aux informations d'état actuelles de l'agent.
